# EUROPEAN PATENT APPLICATION

(11) **EP 4 180 388 A1**
(43) Date of publication of application: **17.05.2023**
(21) Application number: 21208575.7
(22) Date of filing: 16.11.2021
(51) Int. Cl.: C01B 21/086

(54) **A POLY(SULFUR NITRIDE) MATERIAL, A SUSPENSION THEREOF AND A CORRESPONDING PRODUCTION METHOD**

(71) Applicant: Martin-Luther-Universität Halle-Wittenberg, 06108 Halle/Saale (DE)
(72) Inventor: Amado, Elkin, 06108 Halle (Saale) (DE); Kreßler, Joerg, 06114 Halle (Saale) (DE)
(74) Representative: Gulde & Partner

(57) **Abstract**

A poly(sulfur nitride) material (abbrev.: (SN)X material) comprising at least one of:
a population of particles consisting of poly(sulfur nitride) (abbrev.: (SN)ₓ particles), a population of wires consisting of poly(sulfur nitride) (abbrev.: (SN)ₓ wires), and a population of rods consisting of poly(sulfur nitride) (abbrev.: (SN)ₓ rods).

A corresponding method of producing said poly(sulfur nitride) material. And a suspension comprising said (SN)ₓ material.

## Description

### Field of the Invention

The field of the invention relates to material science and the development of electrically conductive materials based on poly(sulfur nitride) as non-toxic and price effective alternative to the prior art of transition-metal-based materials.

### Technological Background

Poly(sulfur nitride), abbreviated (SN)ₓ, possesses several unique electrical and optical properties for a polymer. It exhibits metal-like electrical conductivity in its pristine form (i.e. without any doping) in quasi-one dimension. Its appearance resembles the metallic luster and color of gold, but it is optically highly anisotropic, which is clearly evidenced when investigated under polarized light. Besides, it becomes superconductive at very low temperatures (below 0.26 K).

In spite of such unique properties, which has been known since the mid-1970s, there are no commercial applications of (SN)ₓ, and research involving it has come to a standstill. One main reason stems from the fact that (SN)ₓ has neither melting point nor glass transition temperature. Instead, (SN)ₓ decomposes, when heated above -208 °C, or it will depolymerize if heated under high vacuum above -140 °C. Furthermore, (SN)ₓ is insoluble, therefore, it is not available as liquid polymer solutions for further industrial processing.

Consequently, there is a continued interest for improving the processability of (SN)ₓ in order to open up new application fields for this economically and ecologically promising material in industry and research.

### Summary of Invention

The objective of the invention is solved and the disadvantages of the prior art are overcome, at least partially, by the provision of a poly(sulfur nitride) material, a suspension thereof and its corresponding producing method according to the appended claims. The dependent claims are directed to preferred embodiments of the present disclosure.

A first aspect of the disclosure relates to a (electrically conductive) poly(sulfur nitride) material (abbrev.: (SN)ₓ material) comprising at least one (or two) of a population of particles consisting of poly(sulfur nitride) (abbrev.: (SN)ₓ particles), a population of wires consisting of poly(sulfur nitride) (abbrev.: (SN)ₓ wires), and a population of rods consisting of poly(sulfur nitride) (abbrev.: (SN)ₓ rods).

The population of particles consisting of poly(sulfur nitride) (abbrev.: (SN)ₓ particles) is characterized in that the (SN)ₓ particles have a Dₚ,₅₀ equivalent circular area diameter greater than or equal to 1 nm and less equal to 100 µm. (SN)ₓ particles in this range improve the processability of the (SN)ₓ material as they can be provided in suspensions. In addition, (SN)ₓ particles having a Dₚ,₅₀ in the range of 500 nm to 100 µm are large enough to be suitable for imaging by different optical microscopy techniques. On the other hand, (SN)ₓ particles having a Dₚ,₅₀ in the range or 1 nm to 500 nm are suitable as labels or to be incorporated in sensors for spectroscopic investigations in biomedicine.

In a preferred embodiment, the (SN)ₓ particles have a Dₚ,₅₀ equivalent circular area diameter greater than or equal to 1 nm and less or equal to 20 µm. Preferably, the (SN)ₓ particles have a Dₚ,₅₀ equivalent circular area diameter greater than or equal to 1 nm and less or equal to 10 µm. Preferably, the (SN)ₓ particles have a Dₚ,₅₀ equivalent circular area diameter greater than or equal to 1 nm and less or equal to 5 µm. Preferably, the (SN)ₓ particles have a Dₚ,₅₀ equivalent circular area diameter greater than or equal to 1 nm and less or equal to 3.5 µm. More preferably, the (SN)ₓ particles have a Dₚ,₅₀ equivalent circular area diameter greater than or equal to 1 nm and less than 1 µm. Preferably, the (SN)ₓ particles have a Dₚ,₅₀ equivalent circular area diameter greater than or equal to 1 nm and less or equal to 800 nm.

Most preferably, the (SN)ₓ particles have a Dₚ,₅₀ equivalent circular area diameter greater than or equal to 1 nm and less or equal to 500 nm, since (SN)ₓ particles within this range already form stable suspensions without additional stabilizing agent. Preferably, the (SN)ₓ particles have a Dₚ,₅₀ equivalent circular area diameter greater than or equal to 1 nm and less or equal to 200 nm. Preferably, the (SN)ₓ particles have a Dₚ,₅₀ equivalent circular area diameter greater than or equal to 1 nm and less or equal to 100 nm. Preferably, the (SN)ₓ particles have a Dₚ,₅₀ equivalent circular area diameter greater than or equal to 1 nm and less or equal to 50 nm.

The median Dₚ,₅₀ equivalent circular area diameter is calculated by optical granulometric analysis of atomic force microscopy images as the diameter of an equivalent circular particle having the same cross-sectional area as the imaged particle located at 50 % value of the cumulative cross-sectional area distribution.

The (SN)ₓ particles may comprise irregular shaped (SN)ₓ particles and spheroidal (SN)ₓ particles.

The population of wires consisting of poly(sulfur nitride) (abbrev.: (SN)ₓ wires) is characterized in that the (SN)ₓwires have a width measured at the point of maximum wideness of the (SN)ₓ wire (W) of greater than or equal to 1 nm and less or equal to 100 µm.

In addition the (SN)ₓ wires have an aspect ratio (L/W) expressed as a length (L) of the (SN)ₓ wire to width measured at the point of the maximum wideness of the (SN)ₓ wire (W) of L/W > 50. (SN)ₓ wires in this range improve the processability of the (SN)ₓ material. Also they are suitable of being used as electrical connectors in electronic applications.

The width is measured at the point of maximum wideness of the (SN)ₓ wire (W) and said width and the length (L) are determined by topographic evaluation of atomic force microscopy images. The length (L) is measured along the longest dimension of the wire. That is, the length of a linear or non-linear (curved) wire will be measured, for instance, along the curved longitudinal side of the wire.

In a preferred embodiment, the (SN)ₓwires have a width measured at the point of maximum wideness of the (SN)ₓ wire (W) of greater than or equal to 1 nm and less or equal to 10 µm. Preferably, the (SN)ₓ wires have a width measured at the point of maximum wideness of the (SN)ₓ wire (W) of greater than or equal to 1 nm and less or equal to 5 µm. Preferably, the (SN)ₓ wires have a width measured at the point of maximum wideness of the (SN)ₓ wire (W) of greater than or equal to 1 nm and less or equal to 1.5 µm. More preferably, the (SN)ₓwires have a width measured at the point of maximum wideness of the (SN)ₓ wire (W) of greater than or equal to 1 nm and less or equal to 500 nm, since (SN)ₓ wires within this range already form stable suspensions without additional stabilizing agent. Preferably, the (SN)ₓwires have a width measured at the point of maximum wideness of the (SN)ₓ wire (W) of greater than or equal to 1 nm and less or equal to 300 nm. Preferably, the (SN)ₓwires have a width measured at the point of maximum wideness of the (SN)ₓ wire (W) of greater than or equal to 1 nm and less or equal to 250 nm. Preferably, the (SN)ₓwires have a width measured at the point of maximum wideness of the (SN)ₓ wire (W) of greater than or equal to 1 nm and less or equal to 100 nm.

The population of rods consisting of poly(sulfur nitride) (abbrev.: (SN)ₓ rods) is characterized in that the (SN)ₓ rods have a width measured at the point of maximum wideness of the (SN)ₓ rod (W) of greater than or equal to 1 nm and less or equal to 100 µm.

In addition, (SN)ₓ rods have an aspect ratio (L/W) expressed as a length (L) of the (SN)ₓ rod to the width measured at the point of maximum wideness of the (SN)ₓ rod (W) of L/W ≤ 50. (SN)ₓ rods in this range improve the processability of the (SN)ₓ material. Due to their high optical anisotropy (SN)ₓ rods having a width measured at the point of maximum wideness of the (SN)ₓ rod (W) in the range of 500 nm to 10 µm are particularly suitable for imaging by polarized optical microscopy and related techniques.

The width is measured at the point of maximum wideness of the (SN)ₓ rod (W) and said width and the length (L) are determined by topographic evaluation of atomic force microscopy images. The length (L) is measured along the longest dimension of the rod. That is, the length of a linear or non-linear (curved) rod will be measured, for instance, along the curved longitudinal side of the rod.

In a preferred embodiment, the (SN)ₓ rods have a width measured at the point of maximum wideness of the (SN)ₓ rod (W) of greater than or equal to 1 nm and less or equal to 10 µm. Preferably, the (SN)ₓ rods have a width measured at the point of maximum wideness of the (SN)ₓ rod (W) of greater than or equal to 1 nm and less or equal to 5 µm. Preferably, the (SN)ₓ rods have a width measured at the point of maximum wideness of the (SN)ₓ rod (W) of greater than or equal to 1 nm and less or equal to 1.5 µm. More preferably, the (SN)ₓ rods have a width measured at the point of maximum wideness of the (SN)ₓ rod (W) of greater than or equal to 1 nm and less or equal to 500 nm, since (SN)ₓ rods within this range already form stable suspensions without additional stabilizing agent. Preferably, the (SN)ₓ rods have a width measured at the point of maximum wideness of the (SN)ₓ rod (W) of greater than or equal to 1 nm and less or equal to 300 nm. Preferably, the (SN)ₓ rods have a width measured at the point of maximum wideness of the (SN)ₓ rod (W) of greater than or equal to 1 nm and less or equal to 250 nm. Preferably, the (SN)ₓ rods have a width measured at the point of maximum wideness of the (SN)ₓ rod (W) of greater than or equal to 1 nm and less or equal to 100 nm.

In another embodiment, the poly(sulfur nitride) material (abbrev.: (SN)ₓ material) comprises (or consists of) a population of wires consisting of poly(sulfur nitride) (abbrev.: (SN)ₓ wires), and a population of rods consisting of poly(sulfur nitride) (abbrev.: (SN)ₓ rods), wherein the (SN)ₓ wires and (SN)ₓ rods are as defined above.

In an further embodiment, the poly(sulfur nitride) material (abbrev.: (SN)ₓ material) consists of (SN)ₓ particles, which comprise irregular shaped (SN)ₓ particles and spheroidal (SN)ₓ particles with a Dₚ,₅₀ equivalent circular area diameter as defined above.

A second aspect of the disclosure relates to a method of producing a poly(sulfur nitride) material (abbrev.: (SN)ₓ material), which comprises (or consists of) at least one of the (SN)ₓ particles, the (SN)ₓ wires and the (SN)ₓ rods (and optionally a second solvent).

The method comprises the following steps:
S1) providing a macroscopic poly(sulfur nitride) substrate (abbrev.: macroscopic (SN)ₓ substrate).
S2) breaking apart the macroscopic (SN)ₓ substrate by means of a mechanical treatment in a first solvent and/or partially etching the macroscopic (SN)ₓ substrate by means of a liquid reagent, in order to yield a crude mixture, which comprises the (SN)ₓ material; and
S3) isolating a (colloidal) suspension of the (SN)ₓ material in a second solvent from the crude mixture of step S2 by means of a separation process according to particle size. In other words, in step S2 the mechanical treatment and the partial chemical etching are suitable to disrupt the internal structure of the macroscopic (SN)ₓ substrate, thus, reducing its particle size in order to yield a crude mixture, which comprises the (SN)ₓ material.

In a preferred embodiment, the macroscopic (SN)ₓ substrate comprises macroscopic (SN)ₓ crystals or a macroscopic (SN)ₓ thin film.

In another embodiment, the mechanical treatment of step S2 comprises vortexing by means of a vortex-shaker, homogenizing by means of an ultrasonic treatment, and homogenizing by means of a rotator-stator homogenizer, or combinations thereof.

In a further embodiment, the first solvent and the second solvent are independently selected from at least one of the group comprising toluene, benzene, xylene, dichloromethane, chloroform, trifluorotoluene, hexafluoroisopropanol, carbon tetrachloride, chlorobenzene, 1,2-dichlorobenzene, methanol, ethanol, 1-propanol, isopropanol, 1,4-dioxane, tetrahydrofuran, ethyl acetate, dimethyl sulfoxide, acetone, carbon disulfide and water. More preferred, at least one of the first solvent and the second solvent is a solvent mixture of chlorobenzene and 1,2-dichlorobenzene. This mixture shows an increased affinity towards the SNₓ material, thus, increases the stability of suspensions thereof. In another embodiment, the aforementioned solvent mixture has a molar ratio of chlorobenzene to 1,2-dichlorobenzene in a molar ratio between 2:1 and 1:2, preferably of 2:3, which further increases the aforementioned affinity towards the SNₓ material.

In a preferred embodiment, the liquid reagent is selected from at least one of the group comprising an ionic liquid, an organic acid and an inorganic acid. The ionic liquid is preferably 1,5-diazabicyclo[4.3.0]non-5-enium acetate. Said ionic liquid may be easily removed by vaporization under high vacuum. Preferably, the organic acid is glacial acetic acid or formic acid. Preferably, the inorganic acid is sulfuric acid. When said inorganic and organic acids are used, mainly the structurally weaker areas of the internal structure of the macroscopic (SN)ₓ substrate are (partially) removed (or further weakened) by the etching process, whereas degradation of the resulting smaller-sized (SN)ₓ material is avoided. In order to enhance this effect, preferably, the concentration of the organic acids and inorganic acids is in the range of 0.1 to 1.0 mol/L.

In another embodiment, the separation process of step S3 comprises sedimentation, (iterative) centrifugation, ultrafiltration, microfiltration and field flow fractionation, or combinations thereof.

In a preferred embodiment, the method may further comprise step S4), which is adding a stabilizing agent to the isolated (SN)ₓ material of step S3. When the stabilizing agent is added to the isolated (colloidal) suspension of the (SN)ₓ material, the stabilizing agent increases the shelf-life of the suspension.

Preferably, said stabilizing agent is selected from at least one of the group of citrate, poly(vinylpyrrolidone), cetyltrimethylammonium bromide, poly(ethylene glycol), methoxy-poly(ethylene glycol)-thiol (also poly(ethylene glycol) methyl ether thiol) , alpha-lipoic acid and poly(acrylic acid).

In another embodiment, the method may further comprise step S5) coating the isolated (SN)ₓ material of step S3 with a protective layer or coating the mixture of the (SN)ₓ material and stabilizing agent of step S4 with a protective layer. For instance, the protective layer may be a silicate layer formed with tetraethyl orthosilicate. A suitable coating method with tetraethyl orthosilicate may be for instance the Stöber process. The protective layer may improve the chemical and physical stability of the (SN)ₓ material.

In a preferred embodiment, the method may further comprise step S6), which is drying the obtained (SN)ₓ material. This drying step S6 may follow directly after step S3 in order to obtain pure (SN)ₓ material as dry powder. But in a different embodiment, drying step S6 may follow after the addition of the stabilizing agent in step S4, which results in a dry powder mixture of the stabilizing agent and the (SN)ₓ material. Alternatively, the drying step S6 may follow after the (SN)ₓ material was separated in step S3, and the stabilizer agent was added in step S4 and this mixture was coated according to step S5.

In all above said embodiments, said drying step S6 may comprise freeze drying or spray drying. The above mentioned drying methods allow the (SN)ₓ material to be isolated as a dry powder without detrimental or potentially hazardous decomposition during the drying process.

A third aspect of this disclosure relates to a (colloidal) suspension comprising the (electrically conductive) (SN)ₓ material according to the first aspect of the disclosure and the second solvent, which is selected from at least one of the group comprising toluene, benzene, xylene, dichloromethane, chloroform, trifluorotoluene, hexafluoroisopropanol, carbon tetrachloride, chlorobenzene, 1,2-dichlorobenzene, methanol, ethanol, 1-propanol, isopropanol, 1,4-dioxane, tetrahydrofuran, ethyl acetate, dimethyl sulfoxide, acetone, carbon disulfide and water. In an embodiment, the second solvent is a solvent mixture of chlorobenzene and 1,2-dichlorobenzene. This mixture shows an increased affinity towards the SNₓ material, thus, increases the stability of suspensions thereof. Preferably, the aforementioned solvent mixture has a molar ratio of chlorobenzene to 1,2-dichlorobenzene in a molar ratio between 2:1 and 1:2, preferably of 2:3, which further increases the aforementioned affinity towards the SNₓ material.

In another embodiment, the (colloidal) suspension may further comprise a stabilizing agent selected from at least one of the group comprising citrate, poly(vinylpyrrolidone), cetyltrimethylammonium bromide, poly(ethylene glycol), methoxy-poly(ethylene glycol)-thiol (also poly(ethylene glycol) methyl ether thiol), alpha-lipoic acid and poly(acrylic acid).

### Brief Description of the Drawings

**Figure 1** shows the initial pristine macroscopic (SN)ₓ substrates, left image a macroscopic (SN)ₓ crystal and right image a macroscopic (SN)ₓ thin film, with their internal structures down to the nanometer scale, and evidences the origin of the morphology of the corresponding (SN)ₓ materials produced by the top-down producing method according to Example 1, right image, and Example 2, left image.
**Figure 2** shows a flowchart summarizing the method steps, S1 to S6, of the method of producing an (SN)ₓ material following a top-down approach.
**Figures 3A-D** illustrate the time progress of the synthesis of spheroidal and irregular-shaped (SN)ₓ particles by ultrasonic treatment of macroscopic (SN)ₓ thin films with an initial film thickness of 190 nm corresponding to Example 1.
**Figures 4A-B** illustrate the analytic procedure for the determination of the particle size distribution by optical granulometry of the sample shown in Fig.4A corresponding to Fig. 3B.
**Figures 5A-B** show AFM measurements on the same sample as shown in Fig.3B, i.e. a single (SN)ₓ particle obtained by ultrasonic treatment of an (SN)ₓ thin film and deposited onto a silicon substrate.
**Figures 6A-B** show AFM measurements of the same sample area shown in figure 3D, that is a layer of (SN)ₓ particles obtained by ultrasonic treatment of an (SN)ₓ thin film according to Example 1 with the (SN)ₓ particles deposited onto a silicon substrate.
**Figures 7A-B** show the result of AFM measurements on a single (SN)ₓ rod obtained by ultrasonic treatment of (SN)ₓ crystals corresponding to Example 2 with the (SN)ₓ rods deposited onto a silicon substrate.
**Figures 8A-B** show the result of optical microscopy examination of single (SN)ₓ wires and rods obtained by partial chemical etching of (SN)ₓ crystals corresponding to Example 3.
**Figures 9A-B** show the result of optical microscopy examination of single (SN)ₓ rods obtained by combined ultrasound and partial chemical etching of (SN)ₓ crystals corresponding to Example 4.
**Figures 10A-B** show the result of AFM measurements on single (SN)ₓ wires obtained by combined ultrasonic treatment and partial chemical etching of (SN)ₓ crystals corresponding to Example 4, with the (SN)ₓ wires deposited onto a silicon substrate.

### Detailed Description of the Invention

This disclosure will be described more fully hereinafter with reference to the accompanying figures, in which certain embodiments are shown.

In this disclosure, the term poly(sulfur nitride) is a synonym for (SN)ₓ. (SN)ₓ or poly(sulfur nitride) may be used as prefix or suffix, e.g. (SN)ₓ particle, indicating a particle consisting of poly(sulfur nitride). The term poly(sulfur nitride) may also correspond to polythiazyl or polymeric sulfur nitride.

In this disclosure, the term substrate refers to the raw material to be treated. In that context, the macroscopic (SN)ₓ substrate may comprise macroscopic (prismatic) (SN)ₓ crystals with a fibrillar internal structure down to the nanometer scale, having edges of length greater than 100 µm and less or equal to 10 mm. The macroscopic (SN)ₓ substrate may further comprise a macroscopic (SN)ₓ thin film, which is defined by length, width and thickness and with at least two of the length, width and thickness being greater than 100 µm and less or equal to 10 cm. The term macroscopic relates to macroscopic dimensions of the poly(sulfur nitride) substrate, which has an ordered internal structure down to the nanometer scale.

Example 1: Synthesis of spheroidal and irregular-shaped (SN)ₓ particles by ultrasonic treatment of (SN)ₓ thin films:
The process is carried out in an ultrasound unit inside a tank of 4.3 L capacity filled with pure water. The bath temperature is kept constant by an external cooling circuit. 5 mg of (SN)ₓ thin film (film thickness =190 nm) are suspended in 100 mL of a solvent mixture of chlorobenzene and 1,2-dichlorobenzene in a molar ratio of 2:3 (hereinafter HAS), inside a glass Schlenk flask purged under argon (or nitrogen).

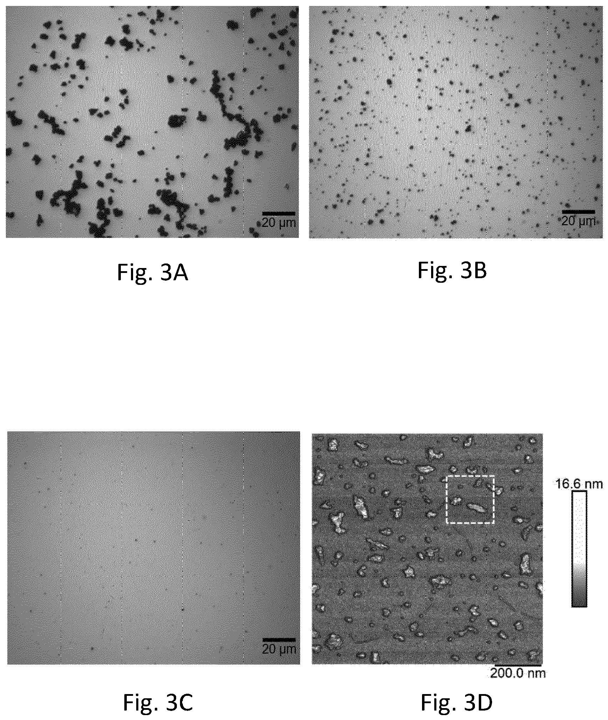

Initial treatment: ultrasonic frequency 37 kHz, ultrasonic power = 54 W, temperature = 25°C, duration = 22 h. The obtained suspension is centrifugated at 4000 rpm. for 5 min. The supernatant is discarded. Sediment is redispersed in 2 mL HAS by shaking or vortexing. The typically obtained aggregates are a few micrometers in size as shown in Fig.3A, after deposition onto a silicon substrate.

Subsequent breaking apart of the aggregates is carried out as follows: the sediment is redispersed in 2 mL HAS in a glass vial, it is purged under argon or nitrogen and treated: ultrasonic frequency 37 kHz, ultrasonic power = 180 W, temperature = 50°C, duration = 2 h. Obtained suspension is centrifugated at 6000 rpm. for 10 min. The supernatant is discarded. The sediment is redispersed in 2 mL HAS by shaking or vortexing. The typical aspect of the obtained few micrometer- and submicrometer-size aggregates after deposition onto a silicon substrate is shown in Fig.3B.

Subsequent breaking apart of the submicrometer-size aggregates down to individual nanoparticles is carried out as follows: redispersed sediment in 2 mL HAS in a glass vial is purged under argon or nitrogen and treated: ultrasonic frequency = 37 kHz, ultrasonic power = 180 W, temperature = 50°C, duration = 2 h. The obtained suspension is centrifugated at 10.000 rpm. for 20 min. The sediment containing persistent aggregates is discarded. The supernatant contains mostly nanosized (SN)ₓ particles, which cannot be resolved by optical microscopy (cf. Fig.3C), but are evidenced as spheroidal- and irregular-shaped (SN)ₓ particles by high-resolution AFM (cf. Fig.3D).

The size distribution of the obtained (SN)ₓ particles is summarized in Table 1.

Example 2: Synthesis of (SN)ₓ rods/-wires by ultrasonic treatment of (SN)ₓ crystals:
The process is carried out in an ultrasound unit inside a tank of 4.3 L capacity filled with pure water. The bath temperature is kept constant by an external cooling circuit. Four (SN)ₓ crystals (1 mm length x 0.25 mm width, total weight 0.58 mg) are added to 2 mL of HAS inside a glass vial and sealed under argon.

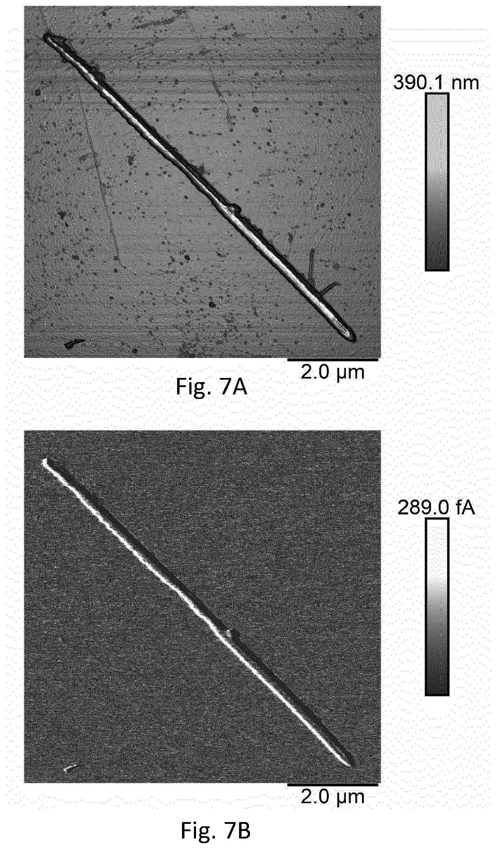

Initial treatment: ultrasonic frequency = 37 kHz, ultrasonic power = 180 W, temperature = 50°C, duration = 1 h. After 1 hour the temperature is decreased to 30°C and the treatment continues for two hours more. The obtained suspension is sedimented for 40 min. The supernatant is decanted, which contains (SN)ₓ rods (cf. Figs.7A-B). The sediment is redispersed in 2 mL HAS by vortexing. Obtained suspension is allowed to sediment for 15 min. The supernatant is decanted, it contains mostly micrometer-size bundles of fibers together with nanosized (SN)ₓ rods. The sediment containing persistent fibrillar fragments is discarded.

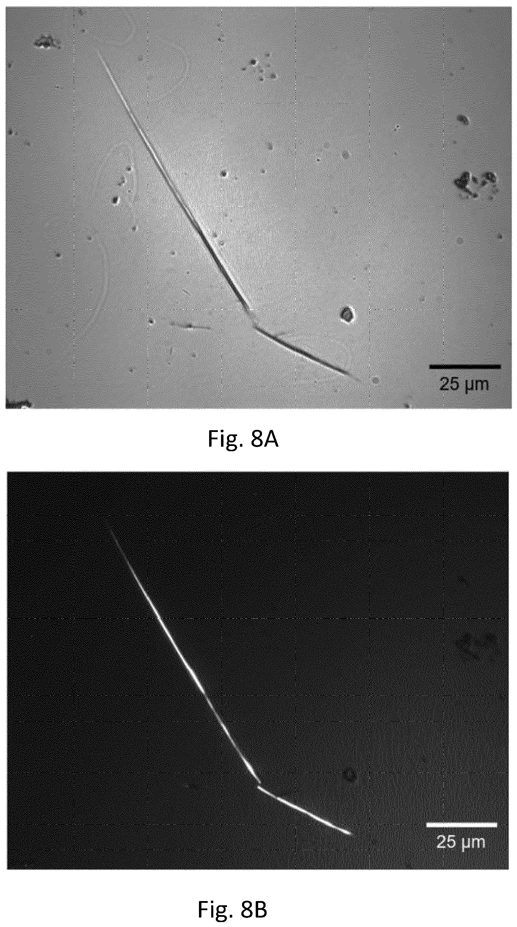

Example 3: Synthesis of (SN)ₓ rods/-wires by partial chemical etching of (SN)ₓ crystals with acids:
The process is carried out in a silicon oil bath provided with control of temperature. Two small (SN)ₓ crystals (1 mm length x 0,25 mm width, total weight of 0.30 mg) are added to 0.5 mL of glacial acetic acid (anhydrous, purity ≥ 99,8%) inside a glass vial and sealed under argon. The bath temperature is kept constant at 110°C. The vial is vortexed every 2h. After three days the heating is stopped and 0.5 mL of isopropanol are added. The obtained suspension is centrifugated at 6000 rpm. for 10min. The supernatant is decanted. The sediment is redispersed in HAS by vortexing. The product is shown in Figs.8A-B after deposition onto a silicon substrate.

Example 4: Synthesis of (SN)ₓ rods/-wires by combined ultrasonic treatment and partial chemical etching of (SN)ₓ crystals.

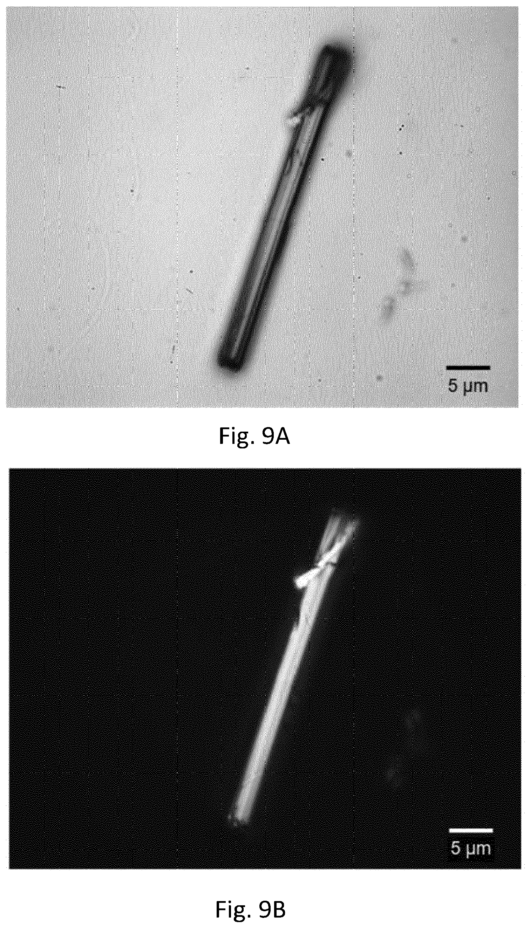

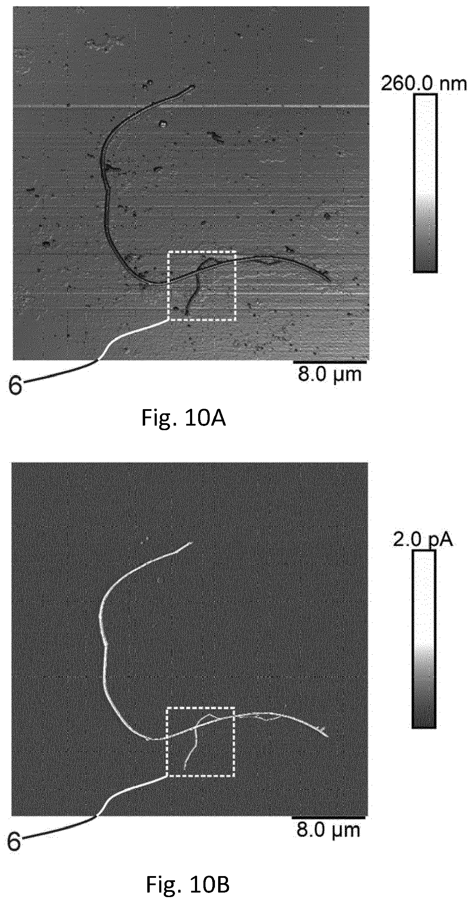

The process is carried out in an ultrasound unit inside a tank of 4.3 L capacity filled with pure water. The bath temperature is kept constant by an external cooling circuit. An (SN)ₓ crystal (1 mm length x 0,25 mm width, total weight of 0.14 mg) is added to 0.5 mL of glacial acetic acid (anhydrous, purity ≥ 99,8%) inside a glass vial and sealed under argon or nitrogen. Conditions: ultrasonic frequency = 37 kHz, ultrasonic power = 54 W, temperature = 50°C, duration = 2 h. The obtained suspension is diluted with 1.5 mL of isopropanol and centrifugated at 6000 rpm. for 10 min. The supernatant is decanted. The sediment is redispersed in 2 mL of HAS by holding during 1 min. in the ultrasonic tank and it is centrifugated again at 6000 rpm. for 20 min. The supernatant is decanted. The sediment is redispersed in 1 mL of HAS by brief ultrasonic exposure. The obtained (SN)ₓ rods are perfectly straight and with flat ends as shown in Fig.9 after deposition onto a silicon substrate. Obtained (SN)ₓ wires exhibit a high aspect ratio and flexibility as shown in Figs.10A-B.

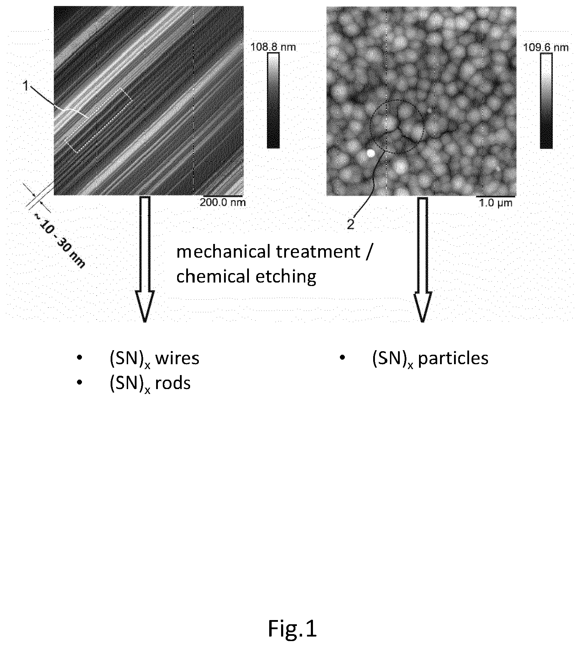

Figure 1 shows the initial pristine macroscopic (SN)ₓ substrates, with their internal structure down to the nanometer scale, and evidences the origin of the morphology of the corresponding (SN)ₓ materials produced by the top-down producing method according to Example 1, right image, and Example 2, left image.

In figure 1, the left image shows AFM topographical examination in force controlled tapping mode of the surface of a millimeter-sized crystal of (SN)ₓ obtained by polymerization of the monomer S₂N₂. The scanned area is 1 µm x 1 µm. Height information is shown. Within the millimeter-sized (SN)ₓ crystal, bundles of fibers, each 10 - 30 nm width are observed, which are oriented in one direction and form the entirety of the crystal. In figure 1, detail (1) illustrates the separation of the individual fibers along sharp boundaries. The disruption of the internal structure of the (SN)ₓ crystal and subsequent reduction in particle size, which may be triggered by mechanical or chemical stresses, starts at these boundaries and yields separated (SN)ₓ material comprising (SN)ₓ rods and -wires.

In figure 1, the right image shows AFM topographical examination in force controlled tapping mode of the surface of a (SN)ₓ thin film deposited onto a glass substrate 3.0 mm x 2.5 mm size. The (SN)ₓ thin film is 210 nm thick. The scanned area is 5 µm x 5 µm. Height information is shown. The (SN)ₓ thin film has a nanoscopic internal granular structure. In figure 1 (right picture), detail (2) encircles structurally weaker areas in the internal structure of the (SN)ₓ thin film. The disruption of the internal structure of the (SN)ₓ thin film and subsequent reduction in particle size, which may be triggered by mechanical or chemical stresses, starts at these weaker areas and yields separated spheroidal- and irregular-shaped (SN)ₓ particles.

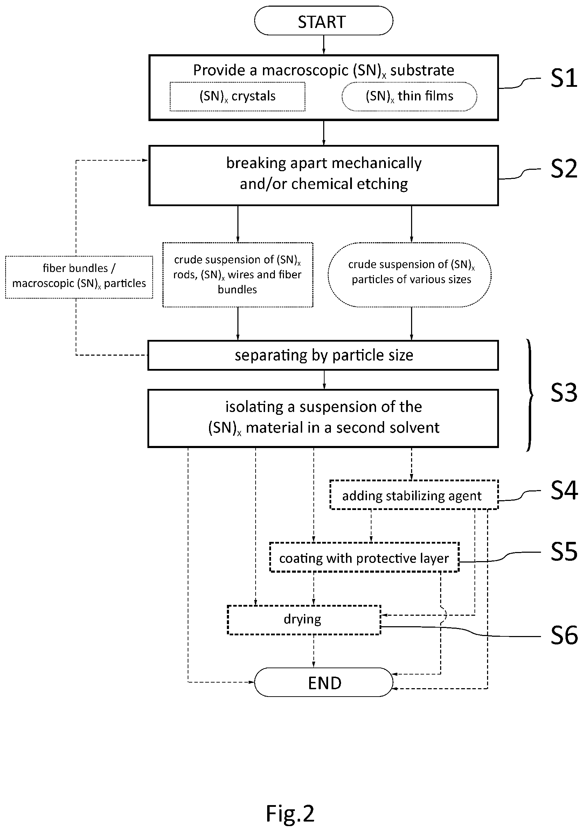

Figure 2 shows a flowchart summarizing the method steps, S1 to S6, of the method for producing the (SN)ₓ material comprising (SN)ₓ particles, (SN)ₓ rods and (SN)ₓ wires following a top-down approach.

In step S1, a macroscopic (SN)ₓ substrate is provided. In particular, the macroscopic (SN)ₓ substrate has macroscopic dimensions and an ordered internal structure down to the nanometer scale. Since the method follows a top-down approach, the particle size of the substrate (may it be determined by the equivalent circular particle diameter D_{P50} or by the width measured at the point of maximum wideness for rods and wires) will decrease, that is, the macroscopic (SN)ₓ substrate initially has greater dimensions than the components of (SN)ₓ material as claimed. The macroscopic (SN)ₓ substrate can be synthesized according to any literature-known method and may include macroscopic (SN)ₓ crystals, macroscopic (SN)ₓ thin films, or a mixture thereof.

In step S2, the macroscopic (SN)ₓ substrate is broken apart in order to yield a crude mixture, which includes the (SN)ₓ material. This is realized by mechanical treatment in a first solvent or by partially etching the macroscopic (SN)ₓ substrate by means of a liquid reagent. Alternatively, the etching of the macroscopic (SN)ₓ substrate by means of a liquid reagent (for instance an organic acid such as acetic acid or formic acid) and the breaking apart by means of a mechanical treatment (for instance an ultrasonic treatment) are performed simultaneously. Alternatively, breaking apart the macroscopic (SN)ₓ substrate by means of a mechanical treatment in a first solvent and partially etching of the macroscopic (SN)ₓ substrate by means of a liquid reagent are performed sequentially.

The mechanical treatment in step S2 may comprise vortexing by means of a vortex-shaker, ultrasonic treatment in an ultrasonic tank or by using a sonotrode, and homogenizing by means of a rotator-stator homogenizer, or combinations thereof.

The ultrasonic treatment may be carried out in a vessel, which contains the macroscopic (SN)ₓ substrate and the first solvent, with the vessel placed inside a water-filled tank of an ultrasound equipment, or the ultrasonic treatment may be carried out with a sonotrode in direct contact with the first solvent. In a preferred embodiment, the ultrasonic treatment is carried out in a vessel placed inside a water-filled tank of an ultrasound equipment as described before, since it prevents contamination of the product with metallic debris of the ultrasound equipment.

The ultrasonic treatment may be performed with an ultrasonic frequency of 10 to 200 kHz preferably an ultrasonic frequency of 37 kHz.

During the ultrasonic treatment, the macroscopic (SN)ₓ substrate in the first solvent may be additionally heated at 25°C to 100°C, without exceeding the boiling point of the first solvent. Higher heating temperatures in combination with the ultrasound treatment might lead to potential decomposition of the SNₓ material.

The vortexing by means of a vortex-shaker may be performed at 10 to 40 Hz. The vortexing by means of a vortex-shaker may be accompanied by preceding heating the macroscopic (SN)ₓ substrate in the first solvent to 25°C to 120°C, without exceeding the boiling point of the first solvent.

The liquid reagent used for partially etching the macroscopic (SN)ₓ substrate in step S2 is selected from at least one of the group comprising an ionic liquid, an organic acid and an inorganic acid. The ionic liquid is preferably 1,5-diazabicyclo[4.3.0]non-5-enium acetate. Preferably, the organic acid is glacial acetic acid or formic acid. Preferably, the inorganic acid is sulfuric acid. When said inorganic and organic acids are used, the structurally weaker areas of the macroscopic (SN)ₓ substrate are preferentially etched away first, at least partially, whereas degradation of the resulting (SN)ₓ material is avoided. In order to enhance this effect, preferably, the concentration of the organic acids and inorganic acids is in the range of 0.1 to 1.0 mol/L. In addition, the etching step may be accompanied by heating the macroscopic (SN)ₓ substrate and the liquid reagent to a maximum of 120°C.

In step S3, a (colloidal) suspension of the (SN)ₓ material in a second solvent is isolated from the crude mixture of step S2 by means of a separation process according to particle size. That is, by a suitable separation process the components of the crude mixture of step S2, which includes the (SN)ₓ material, but also remaining (macroscopic) fiber bundles or macroscopic (SN)ₓ particles, are separated and the (SN)ₓ material is isolated as a (colloidal) suspension in a second solvent. In figure 2, the dashed arrow from step S3 back to step S2 indicates that separated (macroscopic) fiber bundles and macroscopic (SN)ₓ particles may again be treated according to S2, that is both steps may be performed iteratively in order to maximize the yield.

In this context, the separation process of step S3 may comprise sedimentation, iterative centrifugation, ultrafiltration, microfiltration and field flow fractionation.

Figure 2 further illustrates that the following steps S4, S5 and S6 are optional (indicated by dashed arrows) and may be independently performed directly after step S3 or may be performed in sequence.

In step S4, a stabilizing agent is added to the (colloidal) suspension of the (SN)ₓ material, which is obtained after performing step S3.

Coating step S5 may be performed after step S3 or S4. That is, the isolated (SN)ₓ material of step S3 may be coated with a protective layer. Alternatively, in the suspension of the (SN)ₓ material and stabilizing agent of step S4, the (SN)ₓ material may be coated with a protective layer. For instance, the protective layer may be a silicate layer formed with tetraethyl orthosilicate. A suitable coating method may be for instance the Stöber process. The protective layer may improve the chemical and physical stability of the (SN)ₓ material.

In step S6, the (colloidal) suspension of the (SN)ₓ material obtained after step S3 may be dried (indicated by a dashed arrow in figure 2 on the left). For example, in order to freeze-dry the (colloidal) suspension of the (SN)ₓ material, it may be transferred to a third solvent suitable for freeze-drying. The third solvent may be selected from at least one of the group comprising of deionized water, tert-butyl alcohol, DMSO, 1,4-dioxane, acetonitrile, benzene and cyclohexane. The particle transfer from the second solvent used for synthesis to the freeze-drying solvent may be carried out by repeated centrifugation-decanting-dilution steps. For example, the third solvent may be deionized water. In that case, after vortexing or ultrasonic treatment in order to get all particles in suspension, the suspension is frozen in liquid nitrogen (e.g. for 10 min.) and immediately set under reduced pressure (e.g. 4.0 x 10⁻¹ mbar). After 24 h the pressure is further reduced (e.g. 1.0 x 10⁻³ mbar) and kept for additional 24 h. The obtained dried powder may be stored under dry nitrogen or inert gas.

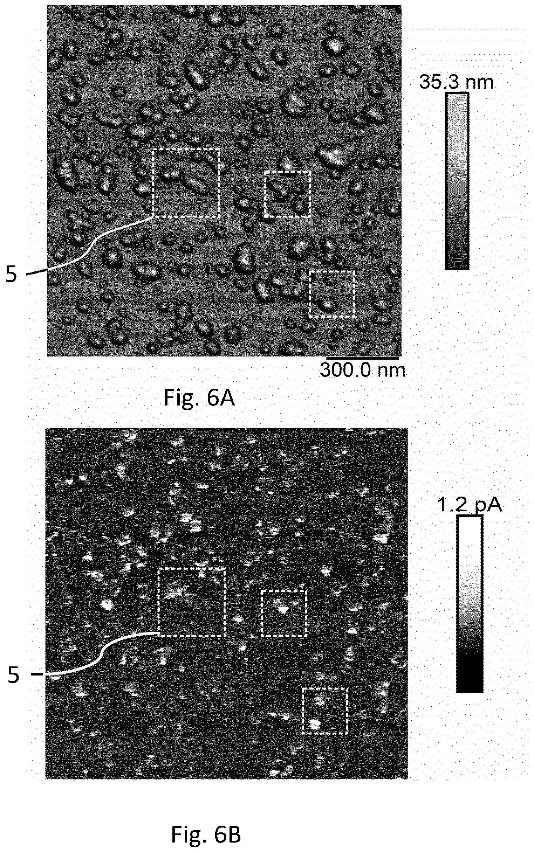

Figures 3A-D illustrate the time progress of the synthesis of spheroidal and irregular-shaped (SN)ₓ particles by ultrasonic treatment (ultrasonic frequency = 37 kHz) of macroscopic (SN)ₓ thin films with an initial film thickness of 190 nm corresponding to Example 1. Figures 3A, 3B, 3C were obtained by optical microscopy in reflection after deposition onto a silicon substrate, magnification 50x. The area covered in Figures 3A, 3B, 3C is 175 µm x 139 µm. Figure 3A shows the typical size of the obtained particles after 22 h ultrasonic treatment (ultrasonic power = 54 W, temperature = 25°C). The particle size ranges from a few micrometers up to 10 µm with an equivalent circular particle diameter Dₚ,₅₀ = 5.05 µm. Some particles agglomerate together during drying forming larger dendritic structures. Figure 3B shows the sample of Figure 3A after additional 2h ultrasonic treatment (ultrasonic power = 180 W, temperature = 50°C). The typical size is reduced to a couple of micrometers, Dₚ,₅₀ = 1.61 µm, also submicrometer-sized particles are present. Figure 3C shows the sample of Figure 3B after additional 2h ultrasonic treatment (ultrasonic power=180 W, temperature = 50°C). The obtained separated nanoparticles cannot be resolved by optical microscopy anymore. Thus, the spots seen in figure 3C correspond to some submicrometer-sized particles still left. Figure 3D shows the result of a high resolution AFM topographical examination of the sample shown in Figure 3C in an area free of spots from submicrometer-sized particles. The scanned area is 1 µm x 1 µm. AFM height scale is given in the figure. Evenly distributed spheroidal- and irregular-shaped (SN)ₓ particles with sizes ranging from a couple of nanometers to several tens of nanometers, Dₚ,₅₀ = 44.1 nm, are evidenced. The area inside the dashed box will be further discussed with Figure 6A.

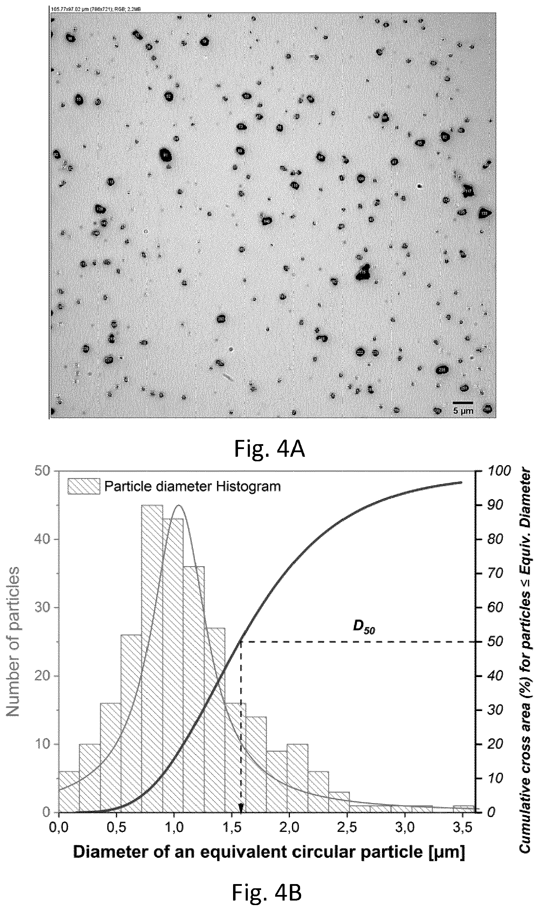

**Table 1 summarizes the particle size distributions obtained by optical granulometric analysis of the samples shown in Figs.3A-B-D. The equivalent diameter (minimum, D_{p,50} and maximum) refers to the diameter of an equivalent circular particle having the same cross-sectional area as the imaged particle measured by optical granulometry (cf.Fig.4A-B).**

| | | **Fig. 3A** | **Fig. 3B** | **Fig. 3D** |
|---|---|---|---|---|
| Surface density [particles/Area mm²] | | 6263 | 26480 | 1.38 x 10⁸ |
| Mean area per particle [µm²] | | 10.44 | 1.25 | 7.40 x 10⁻⁴ |
| Equivalent diameter [µm] | Minimum | 0.37 | 0.15 | 1.38 x 10⁻³ |
| | Dp,₅₀ | 5.05 | 1.61 | 4.41 x 10⁻² |
| | Maximum | 10.08 | 3.49 | 7.31 x 10⁻² |

Figures 4A-B show an exemplary particle diameter histogram and the corresponding cumulative cross-sectional area distribution for the sample shown in Fig.3B, providing the median D_{p,50}, the minimum and maximum equivalent circular area diameters obtained by optical granulometric analysis. The edges of every single particle are automatically detected and the corresponding cross-sectional area is measured, then the diameter of an equivalent particle having the same circular cross section is calculated. Dₚ,₅₀ is the median diameter from the cumulative cross-sectional area distribution for the sample.

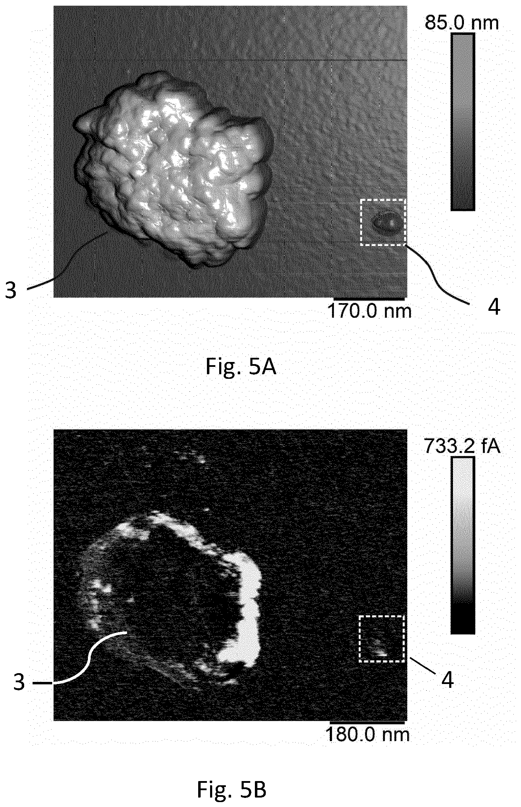

Figures 5A-B show AFM measurements on the same sample as shown in Fig.3B, i.e. a single (SN)ₓ particle obtained by ultrasonic treatment of a (SN)ₓ thin film and deposited onto a silicon substrate. Figure 5A shows the result of AFM topographical examination in tapping mode. The scanned area is 875 x 730 nm. Figure 5A shows an irregular shaped (SN)ₓ particle (3) with an evident internal granular structure. Detail (4) illustrates a spheroidal (SN)ₓ particle with 75.5 nm long axis x 63.5 nm short axis in size. Figure 5B shows a tunneling AFM, electrical conductivity measurement (bias voltage applied = 4 V) of the same particles shown in figure 5A. The scale corresponds to the electrical current flowing through the sample. This measurement confirms that both particles, (3) and (4), are electrically conductive.

Figures 6A-B show AFM measurements of the same sample area shown in figure 3D, that is a layer of (SN)ₓ particles obtained by ultrasonic treatment of an (SN)ₓ thin film according to Example 1 with the (SN)ₓ particles deposited onto a silicon substrate. In figure 6A, detail (5) corresponds to the same area inside the dashed box in figure 3D. AFM height information is given. The scanned area is 1.5 µm x 1.5 µm. The lower resolution is inherent to the conductive-AFM method when applied at high magnifications, and is caused by the bigger radius of the conductive tip (25 nm) compared to the high-resolution tip (1 nm). Figure 6B shows the result of examination by tunneling AFM (bias voltage applied = 4 V) of the same area as in figure 6A. The dashed boxes correspond to the same areas highlighted in figure 6A. The results confirm the electric conductivity of the examined (SN)ₓ particles.

Figures 7A-B show the result of AFM measurements on single (SN)ₓ rods obtained by ultrasonic treatment of (SN)ₓ crystals corresponding to Example 2 with the (SN)ₓ rods deposited onto a silicon substrate. The scanned area is 8.0 µm x 8.0 µm. Figure 7A reveals a (SN)ₓ rod according to the present invention with dimensions of length= 9.86 µm, width = 276 nm, height = 290 nm. The aspect ratio is L/D = 35.7. AFM height scale is given in the figure. Figure 7B shows the result of examination by tunneling AFM (bias voltage applied = 50 mV) of the same (SN)ₓ rod as shown on figure 7A. The result confirms that the (SN)ₓ rods are electrically conductive.

Figures 8A-B show the result of optical microscopy examination of single (SN)ₓ wires and (SN)ₓ rods obtained by partial chemical etching of (SN)ₓ crystals corresponding to Example 3. The sample was examined by optical microscopy in reflection after deposition onto a silicon substrate, magnification 50x. The image area for Figures 8A and 8B is 175 µm x 139 µm. Figure 8A shows the image of optical microscopy in reflection without polarizers. On the left a microwire with dimensions of length = 109.62 µm, width = 1.42 µm is shown. Its aspect ratio is L/D = 77.2. At the bottom, a (SN)ₓ rod with dimensions of length = 36.71 µm, width = 1.46 µm and aspect ratio is L/D=25.1 is presented. The tapered ends are typical for the chemical etching and confer a needle-like aspect to the (SN)ₓ rods and -wires. Figure 8B shows a polarized optical microscopy image of the same area taken in reflection with crossed polarizes. Both (SN)ₓ wires and (SN)ₓ rods exhibit high optical contrast by this microscopy technique.

Figures 9A-B show the result of optical microscopy examination of single (SN)ₓ rods obtained by combined ultrasonic and partial chemical etching of (SN)ₓ crystals corresponding to

Example 4. The sample was examined by optical microscopy in reflection after deposition onto a silicon substrate, magnification 150x. The image area in Figures 9A-9B is 58 µm x 46 µm. Figure 9A shows the result of optical microscopy in reflection without polarizers. It reveals (SN)ₓ rod dimensions of length = 38.74 µm and width = 2.50 µm. The aspect ratio is L/D=15.5. Figure 9B shows a polarized optical microscopy image taken with crossed polarizes exhibiting high optical contrast.

Figures 10A-B show the result of AFM measurements on single (SN)ₓ wires obtained by combined ultrasonic treatment and partial chemical etching of (SN)ₓ crystals corresponding to Example 4, with the (SN)ₓ wires deposited onto a silicon substrate. The scanned area is 40.0 µm x 40.0 µm. Figure 10A reveals a (SN)ₓ wire according to the present invention with dimensions of length= 50.9 µm, width = 252 nm, height = 285 nm. The aspect ratio is L/D = 202.1. AFM height scale is given in the figure. Detail (6) illustrates a thinner filament, 116 nm width, frayed from the (SN)ₓ nanowire. Figure 10B shows the result of examination by tunneling AFM (bias voltage applied = 500 mV) of the same (SN)ₓ nanowire as shown on figure 10A. The result confirms that both the (SN)ₓ nanowire and the thinner filament (6) are electrically conductive.

### Abbreviations

- AFM -: atomic force microscopy
- (SN)ₓ -: poly(sulfur nitride)
- HAS -: mixture of chlorobenzene and 1,2-dichlorobenzene in a molar ratio of 2:3
- rpm -: revolutions per minute

## Claims

1. A poly(sulfur nitride) material (abbrev.: (SN)ₓ material) comprising at least one of:
a population of particles consisting of poly(sulfur nitride) (abbrev.: (SN)ₓ particles), wherein the (SN)ₓ particles have a D_{p,50} equivalent circular area diameter greater than or equal to 1 nm and less equal to 100 µm measured by optical granulometric analysis of atomic force microscopy images;
a population of wires consisting of poly(sulfur nitride) (abbrev.: (SN)ₓ wires), wherein the (SN)ₓwires have a width measured at the point of maximum wideness of the (SN)ₓ wire (W) of greater than or equal to 1 nm and less or equal to 100 µm measured by topographic evaluation of atomic force microscopy images, and having an aspect ratio (L/W) expressed as a length (L) of the (SN)ₓ wire to width
measured at the point of the maximum wideness of the (SN)ₓ wire (W) of L/W > 50; and a population of rods consisting of poly(sulfur nitride) (abbrev.: (SN)ₓ rods),
wherein the (SN)ₓ rods have a width measured at the point of maximum wideness of the (SN)ₓ rod (W) of greater than or equal to 1 nm and less or equal to 100 µm measured by topographic evaluation of atomic force microscopy images, and
having an aspect ratio (L/W) expressed as a length (L) of the (SN)ₓ rod to the width measured at the point of maximum wideness of the (SN)ₓ rod (W) of L/W ≤ 50.

2. The (SN)ₓ material according to claim 1, wherein the (SN)ₓ particles comprise irregular shaped (SN)ₓ particles and spheroidal (SN)ₓ particles.

3. A method of producing a poly(sulfur nitride) material (abbrev.: (SN)ₓ material) according to claims 1 or 2, wherein the method comprises the following steps:
S1) providing a macroscopic poly(sulfur nitride) substrate (abbrev.: macroscopic (SN)ₓ substrate);
S2) breaking apart the macroscopic (SN)ₓ substrate by means of a mechanical treatment in a first solvent and/or partially etching the macroscopic (SN)ₓ substrate by means of a liquid reagent, in order to yield a crude mixture, which comprises the (SN)ₓ material; and
S3) isolating a suspension of the (SN)ₓ material in a second solvent from the crude mixture of step S2 by means of a separation process according to particle size.

4. The method according to claim 3, wherein the macroscopic (SN)ₓ substrate comprises macroscopic (SN)ₓ crystals or a macroscopic (SN)ₓ thin film.

5. The method according to one of claims 3 and 4, wherein the mechanical treatment of step S2 comprises vortexing by means of a vortex-shaker, homogenizing by means of an ultrasonic treatment, and homogenizing by means of a rotator-stator homogenizer, or combinations thereof.

6. The method according to one of claims 3 to 5, wherein the first solvent and the second solvent are independently selected from at least one of the group comprising toluene, benzene, xylene, dichloromethane, chloroform, trifluorotoluene, hexafluoroisopropanol, carbon tetrachloride, chlorobenzene, 1,2-dichlorobenzene, methanol, ethanol, 1-propanol, isopropanol, 1,4-dioxane, tetrahydrofuran, ethyl acetate, dimethyl sulfoxide, acetone, carbon disulfide and water.

7. The method according to one of claims 3 to 6, wherein the first solvent and/or the second solvent is a solvent mixture of chlorobenzene and 1,2-dichlorobenzene, and
wherein the solvent mixture has a molar ratio of chlorobenzene to 1,2-dichlorobenzene in a molar ratio between 2:1 and 1:2, preferably of 2:3.

8. The method according to one of claims 3 to 7, wherein the liquid reagent is selected from at least one of the group comprising an ionic liquid, preferably 1,5-diazabicyclo[4.3.0]non-5-enium acetate; an organic acid, preferably glacial acetic acid and formic acid; and an inorganic acid, preferably sulfuric acid.

9. The method according to one of claims 3 to 8, wherein the separation process of step S3 comprises sedimentation, centrifugation, ultrafiltration, microfiltration and field flow fractionation, or combinations thereof.

10. The method according to one of claims 3 to 9, wherein the method further comprises step:
S4) adding a stabilizing agent to the isolated (SN)ₓ material of step S3.

11. The method according to claim 10, wherein the stabilizing agent is selected from at least one of the group comprising citrate, poly(vinylpyrrolidone), cetyltrimethylammonium bromide, poly(ethyleneglycol), methoxy-poly(ethyleneglycol)-thiol, alpha-lipoic acid and poly(acrylic acid).

12. The method according to one of claims 3 to 11, wherein the method further comprises step:
S5) coating the isolated (SN)ₓ material of step S3 with a protective layer or coating the mixture of the (SN)ₓ material and stabilizing agent of step S4 with a protective layer.

13. The method according to one of claims 3 to 12, wherein the method further comprises step:
S6) drying the obtained (SN)ₓ material.

14. The method according to claim 13, wherein the drying step S6 comprises freeze drying the obtained (SN)ₓ material or spray drying the obtained (SN)ₓ material.

15. A suspension comprising the (SN)ₓ material according to claim 1 or 2 and the second solvent, which is selected from at least one of the group comprising toluene, benzene, xylene, dichloromethane, chloroform, trifluorotoluene, hexafluoroisopropanol, carbon tetrachloride, chlorobenzene, 1,2-dichlorobenzene, methanol, ethanol, 1-propanol, isopropanol, 1,4-dioxane, tetrahydrofuran, ethyl acetate, dimethyl sulfoxide, acetone, carbon disulfide and water.
